# EUROPEAN PATENT APPLICATION

(11) **EP 4 847 378 A1**
(43) Date of publication of application: **02.12.2026**
(21) Application number: 26178542.2
(22) Date of filing: 13.05.2026
(51) Int. Cl.: B64C 11/26, B64F 5/10, B64C 27/473

(54) **COMPOSITE ROTOR BLADE AND METHOD OF MANUFACTURING THE SAME**

(30) Priority: 30.05.2025 NL 2040472
(71) Applicant: Kve Composites B.V., 2497 GB Den Haag (NL)
(72) Inventor: KLOPPENBURG, Frank, 2497 GB c/o THE HAGUE (NL)
(74) Representative: Arnold & Siedsma

(57) **Abstract**

Disclosed is a composite rotor blade. The rotor blade comprises reinforcing fibers and a resin, and extends from a hub-end to a tip-end thereof in a span direction over a span length and from a leading edge to a trailing edge thereof in a width direction over a chord width. The rotor blade comprises a root portion at the hub-end, an outer portion extending up to the tip-end and a flexure portion in between the root and outer portions, wherein the root portion is configured for connection to a rotor hub; the outer portion comprises a sandwich structure having a composite skin and a core; and the flexure portion comprises a monolithic composite laminate, wherein the chord width of the flexure portion decreases over the span length in the direction of the tip-end. Also disclosed are a rotor comprising a rotor hub and the composite rotor blade, and an aerial vehicle comprising the rotor. Finally a method of manufacturing the composite rotor blade is disclosed.

## Description

### TECHNICAL FIELD OF THE INVENTION

The invention relates to a composite rotor blade. Such blades are made from composite materials, comprising reinforcing fibers and a resin, and are typically connected to a rotor hub of an aerial vehicle such as a helicopter. The invention further relates to a rotor comprising a rotor hub and a composite rotor blade, and to an aerial vehicle comprising the rotor. The invention finally relates to a method of manufacturing the composite rotor blade.

### BACKGROUND OF THE INVENTION

In conventional (helicopter) rotors, operating variations in rotor blade loads due to gusts, forward speed and flight maneuvers for instance, are typically absorbed by providing rotation freedom at the rotor hub. Rotation freedom may for instance be provided around flap and feathering axes of the rotor blade, and/or around a rotational axis thereof by a, preferably fully, articulated rotor hub with delta-3 configuration and/or damping features, as known in the art. Such a rotor system is generally referred to as a soft rotor system. The flap axis is the axis about which the rotor blade is moved up or down and extends from a leading edge of the rotor blade to a trailing edge thereof. The feathering axis is the axis about which the pitch angle of the rotor blade is varied and extends from a hub-end to a tip-end of the rotor blade. The rotational axis is the axis around which the rotor rotates and extends about perpendicular to both the flap and feathering axes. The above definitions also apply in the context of the present invention disclosure.

Rigid rotor systems are used as well. An electric vertical take-off and landing (eVTOL) rotor aircraft for instance is typically operated by a number of (multiple) rotors with direct drive by an electric motor. The - more or less - constant torque for any operating RPM for an electric motor, allows for a simple rotor system where the amount of lift generated by the rotor is controlled by controlling the rotor speed (RPM) at any time. This can be done individually for each rotor, giving the rotor system not only ability to control the aircraft lift, but also to maneuver without the need for blade pitch alterations and complex swash plate systems. This drastically reduces the rotor system complexity, weight and cost, which is particularly important in such multi-rotor aircraft.

In a rigid rotor system however, the rotation freedom is not provided in the rotor hub, and therefore alternative mechanisms to resist vibrations, (lift and drag) load variations and natural frequencies in the operating RPM (rounds per minute) range are required to accommodate or prevent excessively high loads on the rotor blade, blade grip, rotor hub, rotation shaft and/or rotation motor. In addition, damping of the movements is required to absorb uncontrolled and self-inclining deformations.

Several solutions have been proposed in the art, such as providing a flapping flexure in the blade root, as for instance applied in the Airbus helicopter H145, providing separated hinges for flap, lag and feathering movements, providing elastomeric dampers, typically for lead and lag movements, or providing vibration dampers and hinges. Generally speaking, damping of the rotor blade flap movements may occur naturally to some extent by the rotor blade aeroelastic behavior per se. In such a case, the rotor blade is designed such that its natural frequencies of rotation are sufficiently far removed from the operating RPM. Some movements require dedicated damping mechanisms to avoid resonance problems.

The known systems described hereinabove are complex and moreover require extensive maintenance.

### SUMMARY OF THE INVENTION

It is an aim of the present invention therefore to provide a composite rotor blade, preferably a composite rotor blade to be mounted rigidly to a rotor hub, which does not have the drawbacks of the state of the art. A particular aim is to provide a composite rotor blade able to accommodate the relatively large deformations in use, without the need for providing additional damping of the rotor lead, lag and feathering movements. A further aim is to provide a rotor comprising a rotor hub and the composite rotor blade, as well as an aerial vehicle comprising the rotor. Yet another aim is to provide an efficient method of manufacturing the composite rotor blade.

A first aspect of the invention thereto provides a composite rotor blade as claimed. The composite rotor blade comprises reinforcing fibers and a resin, and extends from a hub-end to a tip-end thereof in a span direction over a span length and from a leading edge to a trailing edge thereof in a width direction over a chord width, wherein the rotor blade comprises a root portion at the hub-end, an outer portion extending up to the tip-end and a flexure portion in between the root and outer portions, wherein:
- the root portion is configured for connection to a rotor hub;
- the outer portion comprises a sandwich structure having a composite skin and a core; and
- the flexure portion essentially consists of a monolithic composite laminate,
wherein the chord width of the flexure portion decreases over the span length in the direction of the tip-end.

The invented rotor blade functionality provides a solution where a, preferably rigidly mounted, rotor blade is able to accommodate large deformations, without the need for additional- outside to the rotor blade - damping of the rotor blade lead/lag and feathering movements. This may be achieved by structurally (geometrically and mechanically) linking the lead/lag and feathering movements of the rotor blade to the flapping deformations of the rotor blade and thus creating natural (aeroelastic) damping of the lead/lag and feathering movements.

According to a second aspect of the invention, a method of manufacturing a composite rotor blade as claimed is provided, comprising the steps of:
- providing a preform comprising the reinforcing fibers and the core of the composite rotor blade;
- positioning the preform in a mould;
- closing the mould;
- injecting a resin into the mould to infuse the preform with the resin;
- curing the resin; and
- taking the thus formed composite rotor blade out of the mould.

According to a third aspect of the invention, a rotor comprising a rotor hub and a composite rotor blade as claimed, is provided. In particular for eVTOL which typically use multiple rotors that are mounted directly on a motor, the invented rotor enables weight savings and cost reduction, since it may use less parts and entail less maintenance, compared to the known rotor employing hub damping systems.

In a fourth aspect of the invention, an aerial vehicle comprising the rotor as claimed, is provided.

### DETAILED DESCRIPTION OF THE INVENTION

The invention will now be disclosed in more detail. According to the first aspect, a composite rotor blade is provided, comprising reinforcing fibers and a resin, and extending from a hub-end to a tip-end thereof in a span direction over a span length and from a leading edge to a trailing edge thereof in a width direction over a chord width, wherein the rotor blade comprises a root portion at the hub-end, an outer portion extending up to the tip-end and a flexure portion in between the root and outer portions, wherein:
- the root portion is configured for connection to a rotor hub;
- the outer portion comprises a sandwich structure having a composite skin and a core; and
- the flexure portion essentially consists of a monolithic composite laminate, wherein the chord width of the flexure portion decreases over the span length in the direction of the tip-end.

The root portion is configured to be connected to a rotor hub. It thereto has an appropriate shape as well as appropriate attachment means, such as holes for a bolted connection with the rotor hub. One skilled in the art will be able to envisage such a root portion. The root portion preferably comprises a monolithic composite laminate, but may also be made of a metal, such as steel or aluminum.

The outer portion comprises a sandwich structure having a composite skin and a core. The core may comprise any core material known in the art, such as honeycomb material, foam material, and the like. The composite skin is applied at both sides of the core and is preferably made of a composite laminate bonded to the core, whereby bonding may be achieved with the resin of the composite laminate itself and/or may be achieved by a separate adhesive layer provided in between the core and each composite laminate.

The flexure portion essentially consists of a monolithic composite laminate, wherein the chord width of the flexure portion decreases over the span length in the direction of the tip-end. Therefore, the chord of the flexure portion of the rotor blade tapers down from the hub-end in the direction of the tip-end of the rotor blade. The flexure portion as claimed forms an adequate geometrical hinge that has proven to be able to accommodate in-use deformations without requiring an external damping system. Although discontinuities may be present, it is preferred that the chord width of the flexure portion decreases continuously from the hub-end up to where the outer portion starts.

The flexure portion as claimed allows global deflections caused by aircraft operations without exceeding material strain limits for the composite material used in the flexure portion. Indeed, the flexure portion allows to spread out the curvature of the rotor blade from the flap bending over the substantially entire flexure area, thereby equalizing strains to some extent.

It should be noted that the cross-sectional shape of the rotor blade, and in particular the cross-sectional shape of the outer portion thereof, is designed considering the required aerodynamic properties such as lift, as known in the art.

In a preferred embodiment, a composite rotor blade is provided wherein the chord width of the flexure portion decreases between a maximum chord width Wmax and a minimum chord width Wmin, wherein Wmin/Wmax is at most 0.9, preferably at most 0.8, more preferably at most 0.7, even more preferably at most 0.6, most preferably at most 0.5. Such Wmin/Wmax ratios have been found to provide an improved elastic hinge.

In yet another embodiment of the composite rotor blade, the maximum chord width Wmax is at an end of the flexure portion connecting to the root portion, and the minimum chord width Wmin is at an end of the flexure portion connecting to the outer portion.

It has further turned out that the average thickness of the flexure portion may also have an influence on damping, in particular the ratio of the average thickness to the chord width. A preferred embodiment provides a composite rotor blade wherein the flexure portion has an average thickness D and 5 < Wmin/D < 50, more preferably 5< Wmin/D <40, even more preferably 10 < Wmin/D < 30, most preferably 10 <Wmin/D < 20.

Yet another improvement may be realized by an embodiment of the composite rotor blade wherein the flexure portion is twisted around the feathering axis over an inclination angle that differs from zero. The inclination angle is defined as the angle between a twisted part of the flexure portion and a horizontal plane, with the rotor blade attached to a rotor hub. Preferably, the twisted part of the flexure portion is planar. Also, the flexure portion is preferably planar, either twisted or not. This embodiment creates a geometrical hinge under a specific angle, effectively creating an integrated -elastic-hinge that enables coupling of the flapping movements of the outer blade to lead-lag movements thereof.

In yet another preferred embodiment, a composite rotor blade is provided wherein the monolithic composite laminate of the flexure portion comprises unidirectional fibers, wherein inner layers of the monolithic composite laminate comprise unidirectional fibers extending substantially parallel to the span direction of the rotor blade, and wherein outer layers of the monolithic composite laminate comprise unidirectional fibers extending at a non-zero angle with the span direction. This embodiment has proven to further improve the invented rotor blade since it provides a desired combination of flexibility in the outer fibers and sufficient stiffness in a center of the composite laminate, close to the neutral axis thereof. Further, this embodiment may improve strain allowables in the outer laminate layers.

A monolithic composite laminate does not comprise a core, such as in a sandwich laminate. Unidirectional fibers are defined as extending parallel to each other in one direction, the fiber direction. However, unidirectional fibers may be held together by fibers or threads, extending perpendicular to the fiber direction, or under a non-zero angle to the fiber direction. It is also possible to make use of unidirectional fabrics, if desired. Such UD fabrics have unidirectional fibers as well as transverse fibers holding the UD fibers together.

The fibers in the composite laminates of the present invention (monolithic and sandwich laminates) may be any reinforcing fiber used in composite materials, such as carbon, graphite, glass, aramid, ultrahigh molecular weight polyethylene fiber, and others known to one skilled in the art. The fibers in the composite laminates are embedded in a suitable matrix material, that may be thermoplastic or thermosetting.

Suitable thermoplastic (TP) matrix materials may be any TP known in the art of aircraft, such as the class of materials known as polyaryletherketon (PAEK). Suitable thermosetting (TS) matrix materials may be any TS known in the art of aircraft, such as epoxide resins, polyester resins, bismaleimide resins, and the like. Suitable fiber volume fractions may typically range from 25 to 75 vol%, depending on specific stiffness and strength requirements, but may also fall outside this range.

Another embodiment relates to a composite rotor blade wherein at least 80 vol.% of the unidirectional fibers in the inner layers of the monolithic composite laminate extend substantially parallel to the span, and wherein at least 80 vol.% of the unidirectional fibers in the outer layers of the monolithic composite laminate extend at a non-zero angle with the span.

Yet another embodiment provides a composite rotor blade wherein the ratio of the volume of the inner layers to the volume of the outer layers ranges from 1:1 to 1:5, preferably from 1:2 to 1:4.

In an embodiment, the monolithic composite laminate of the flexure portion is symmetric with respect to a mid-plane of the laminate. In such an embodiment, fibers that are at equal distance to the mid-plane of the laminate have the same fiber direction. In another embodiment, the monolithic composite laminate of the flexure portion is asymmetric with respect to a mid-plane of the laminate. In such an embodiment, fibers that are at equal distance to the mid-plane of the laminate have the same absolute fiber direction but with a different sign. For instance, each fiber in an outer layer having a fiber direction of +α has a counterpart in an outer layer, opposite the mid-plane, having a fiber direction of -α. The latter embodiment the rotor blade exhibits mechanical coupling between flapping movements and torsional (feathering) movements, which may be beneficial for damping purposes.

The composite rotor blade from the hub-end to the tip-end comprises a root portion, a flexure portion and an outer portion respectively. It should be clear that, for aerodynamic reasons, these portions together form a continuous rotor blade, preferably without any discontinuities in chord and/or thickness over its span length. The root, flexure and outer portions therefore are appropriately connected to each other in a manner to convey stresses from one portion to another adjacent portion. According to an embodiment, a composite rotor blade is provided wherein the flexure portion and the outer portion comprise a transition region that mechanically connects the outer portion with the flexure portion. A suitable way to mechanically connect the flexure portion and the outer portion is to extend fibers of the flexure portion further into the outer portion, and vice versa. The transition region is defined accordingly to the region of overlap, i.e. the region where fibers of the flexure portion and fibers of the outer portion overlap with each other.

It is understood that the root portion and the flexure portion mechanically connect to provide a rotor blade that may be attached to a rotor hub. Since both the root and flexure regions are typically made of monolithic composite laminates, connection between these two regions may also be created by overlapping fibers for instance or by simply having these two regions comprised in a monolithic composite laminate having the same lay-up.

If desired, the rotor blade according to an embodiment of the invention may be provided with a balancing weight. In particular, the outer portion of the rotor blade according to an embodiment comprises the balancing weight. A particularly favorable balancing weight has a cross-sectional dimension of the balancing weight alternating over a length of the balancing weight. This helps in retaining the balancing weight in the outer portion of the rotor blade. A further improved embodiment provides a composite rotor blade wherein the balancing weight is retained in a retention element comprising a fibrous textile structure, and wherein the retention element at least partially surrounds the balancing weight. This further improves retaining the balancing weight, in particular when this weight would be broken for instance.

The composite rotor blade according to the invention may be attached to a rotor hub of an aircraft, according to known practices. It is possible to provide the rotor blade from hub-end to tip-end and attach it to the rotor hub as such. This provides a rotor with one rotor blade. Another option is to attach at least two rotor blades to the rotor. Another more efficient embodiment provides a double blade composite rotor blade comprising two flexure portions and two outer portions, arranged symmetrically with respect to the root portion. In this embodiment attaching one double blade composite rotor blade to the rotor hub would be sufficient to obtain a 2-blade rotor. Other embodiments may also comprise three or more blades per composite rotor blade to form a triple blade composite rotor blade, quadruple blade composite rotor blade, quintuple blade composite rotor blade et cetera.

The rotor blade according to the invention can be manufactures according to well-known composite manufacturing practices. For instance, the rotor blade in one embodiment could be made by laying up a plurality of pre-impregnated sheets of composite material, so-called prepregs, and a suitable core material in the outer region, positioning the assembly in an autoclave, and curing the resin of the composite laminates under pressure and preferably also vacuum. Other methods like filament winding for instance could also be used.

It turned out that - according to a second aspect of the invention - a method of manufacturing the composite rotor blade as claimed comprising the steps of:
- providing a preform comprising the reinforcing fibers and the core of the composite rotor blade;
- positioning the preform in a mold;
- closing the mold;
- injecting a resin into the mold to infuse the preform with the resin;
- curing the resin; and
- taking the thus formed composite rotor blade out of the mold,
provides superior control over dimensions, fiber orientations and connections between the different portions of the rotor blade.

Making the preform may involve forming the core, positioning fibers at both sides of the core, laminating the monolithic composite laminate of the flexure portion and, preferably also, of the root portion, and ensure that all portions are mechanically connected to each other by, for instance, letting fibers overlap between regions to form the transition regions. The core may be formed by cutting out a suitable piece of core material, by foaming the core material in a mold, or by press-forming the core material. The core may consist of multiple pieces that cooperate to form the complete core.

After the mold has been closed, a resin is injected to substantially completely infuse the preform. To achieve this, the resin preferably is low viscous, as known in the art. Also, multiple injection points may be used.

In a third aspect of the invention, a rotor comprising a rotor hub and, connected thereto, a composite rotor blade as claimed is provided.

The advantages of the invention appear in particular in an embodiment of the rotor wherein the composite rotor blade is rigidly connected to the rotor hub. The invented rotor blade having flexure with flap-lag and/or flap-pitch coupling allows composite rotors to be installed on a simple (rigid) engine or shaft mount, while maintaining soft rotor system behavior. In this embodiment, the rotor in other words may be provided bearingless.

A fourth aspect of the invention finally provides an aerial vehicle comprising a rotor as claimed according to the third aspect.

The aerial vehicle may be any flying vehicle known in the art. Preferably, the aerial vehicle is one of a helicopter, an electric vertical take-off and landing (eVTOL) aerial vehicle, or an unmanned aerial vehicle (UAV).

### BRIEF DESCRIPTION OF THE FIGURES

Examples of the invention will now be elucidated with reference to the following figures, without however being limited thereto. In the figures:
Figure 1 schematically shows a rotor in accordance with an embodiment of the state of the art;
Figure 2a and 2b schematically show a top view and side view, respectively, of a composite rotor blade in accordance with an embodiment of the invention;
Figure 2c schematically shows a top and side view of a composite rotor blade in accordance with another embodiment of the invention;
Figure 3a shows a detail of a composite rotor blade in accordance with an embodiment of the invention;
Figure 3b schematically shows an inclination angle of a composite rotor blade in accordance with an embodiment of the invention;
Figure 4a to 4c schematically show deformation of a composite rotor blade under operation in accordance with an embodiment of the invention;
Figure 5 schematically shows a cross-sectional view of a transition region of a composite rotor blade in accordance with an embodiment of the invention; and
Figure 6 schematically shows a cross-sectional top view of a composite rotor blade comprising a balancing weight in accordance with an embodiment of the invention.

### DESCRIPTION OF EXEMPLARY EMBODIMENTS

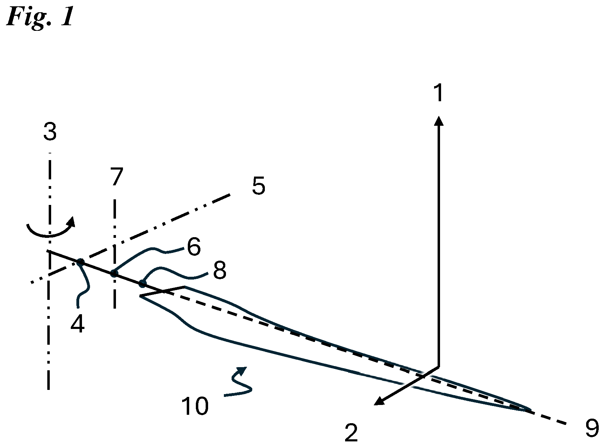

Figure 1 schematically shows an embodiment of a rotor blade 10 in accordance with the state of the art. The rotor blade 10 features an aerodynamic profile that generates lift 1 and drag forces 2 as it rotates around a central rotational axis 3. Additionally, the rotor blade 10 may be subject to forces that may cause displacement from its normal position within the plane of rotation. To maintain aerodynamic stability, these forces are mitigated through the use of specialized components as indicated in Figure 1. A flap hinge 4 allows for movement around a flapping axis 5, enabling the rotor blade 10 to flap up or down relative to the plane of rotation. A lead/lag hinge 6 allows for movement around a lead/lag axis 7, enabling the rotor blade 10 to shift forward (lead) or backward (lag) within the plane of rotation. A feathering bearing 8 allows for movement around a feathering axis 9, enabling adjustments to the pitch angle of the rotor blade 10. These components work together to stabilize the aerodynamic behavior of the rotor blade 10 during operation. However, the state-of-the-art solution is complex and leaves room for improvement.

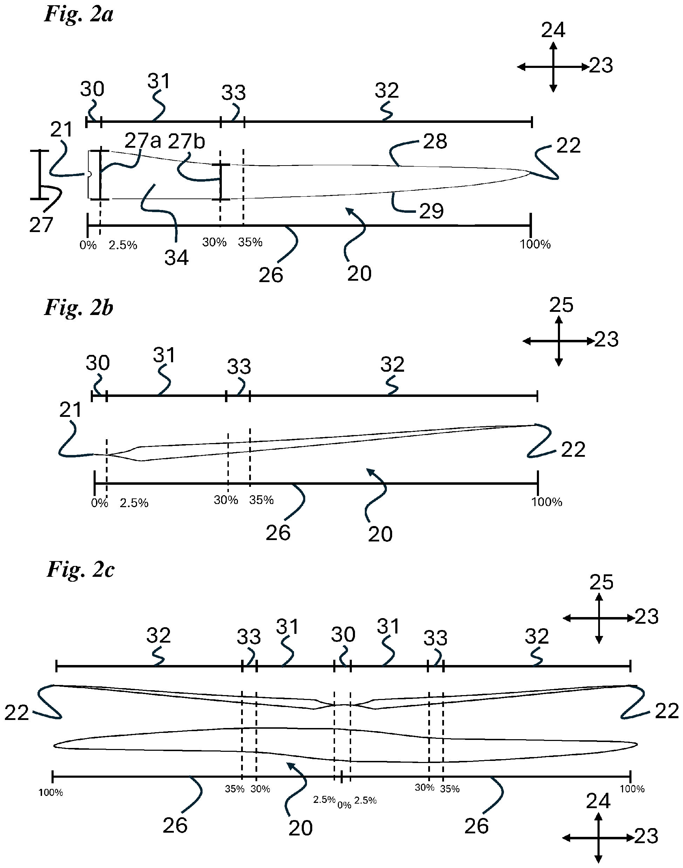

Figure 2a and 2b schematically show a top view and side view, respectively, of an embodiment of a composite rotor blade 20 in accordance with the invention. The composite rotor blade 20 comprises reinforcing fibers and a resin. The composite rotor blade 20 extends from a hub-end 21 to a tip-end 22 thereof in a span direction 23 over a span length 26 and from a leading edge 28 to a trailing edge 29 thereof in a lead/lag direction 24 over a chord width 27. The composite rotor blade 20 comprises a root portion 30 at the hub-end 21, an outer portion 32 extending up to the tip-end 22 and a flexure portion 31 in between the root portion 30 and outer portion 32. The root portion 30 is configured for connection to a rotor hub. The outer portion 32 comprises a sandwich structure having a composite skin and a core. The flexure portion 31 comprises a monolithic composite laminate 34, wherein the chord width 26 of the flexure portion 31 decreases over the span length 26 in the direction of the tip-end 22.

The flexure portion 31 of the composite rotor blade 20 has a maximum chord width 27a (Wₘₐₓ) that is at the end of the flexure portion 31 connecting to the root portion 30, and a minimum chord width (27b) (Wₘᵢₙ) that is at the end of the flexure portion 31 connecting to the outer portion 32, wherein Wₘᵢₙ/Wₘₐₓ is approximately 70%. The flexure portion 31 of the embodiment has an average thickness D, wherein Wₘᵢₙ/D is approximately 12. The flexure portion 31 is twisted around the feathering axis over an inclination angle 35.

Figure 2c schematically shows a side view (top) and top view (bottom) of another embodiment of a composite rotor blade 20 in accordance with the invention. The composite rotor blade 20 is a double blade composite rotor blade comprising two flexure portions 31 and two outer portions 32, arranged symmetrically with respect to the root portion 30.

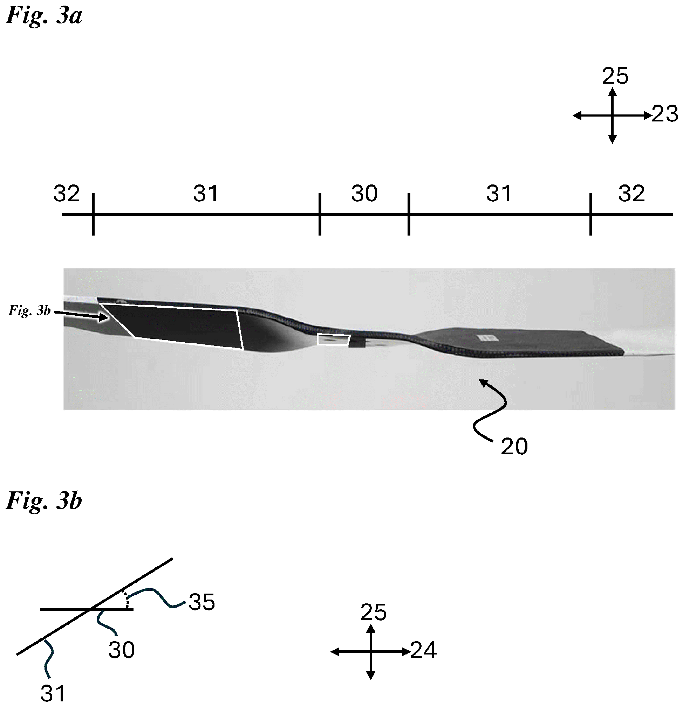

Figure 3a shows a detail of an embodiment as schematically shown in Figure 2c, having two flexure portions 31 and two outer portions 32, arranged symmetrically with respect to the root portion 30. The twist in the flexure portion 31 as a result of the inclination angle 35 can be clearly observed. A plane of the left flexure portion 31 and a plane of the root portion 30 are indicated with a white border. Figure 3b schematically shows an end-view of both these planes as viewed along a feathering axis as indicated with an arrow in Figure 3a. The flexure portion 31 is twisted around the feathering axis over inclination angle 35. This inclination angle 35 is the angle between the plane of the left flexure portion 31 and the plane of the root portion 30 as viewed along the feathering axis. Note that only the inclination angle between the left flexure portion 31 and the root portion 30 is visualized here. There exists a second inclination angle between the root portion 30 and the right flexure portion 31 which is not visualized in Figure 3b. The second inclination angle is equal in size but is rotated in an opposite direction along the feathering axis, i.e. has a different sign.

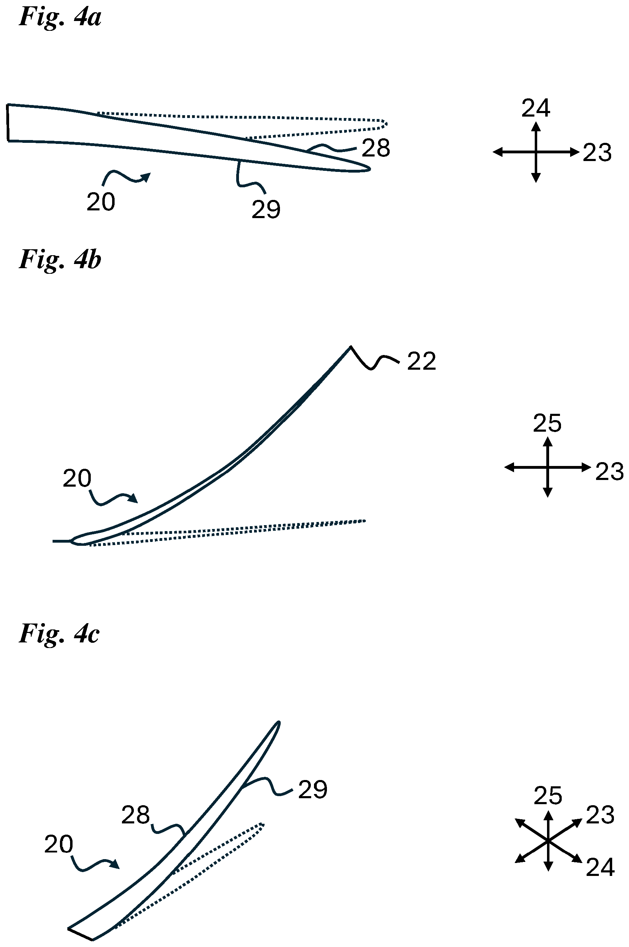

Figure 4a to 4c schematically shows, from different viewpoints, the same deformation of a composite rotor blade 20 under operation in accordance with an embodiment of the invention. Figure 4a shows a top-view of the composite rotor blade 20 wherein the deformation due to lagging can clearly be observed. The blade in a position of rest is shown as a trace to highlight the rotor blade has deformed in the lead/lag direction 24 in the direction of its trailing edge 29 and away from its leading edge 28, i.e. lagging. Figure 4b shows a side-view of the composite rotor blade 20 wherein the deformation due to flapping can clearly be observed. The blade in its position of rest is shown as a trace to highlight the tip-end 22 of the rotor blade has deformed upward in a flap direction 25 during operation. Figure 4c shows a perspective view of the composite rotor blade 20 demonstrating that the deformation in the flap-direction 25 is linked to deformation in the lead/lag direction 24. Note how the lagging and flapping are accommodated by the composite rotor blade 20 without the use of hinges, as shown in Figure 1.

Table 1 shows the composition of the monolithic composite laminate 34 of the flexure portion 31 of the composite rotor blade 20 according to an embodiment of the invention. The monolithic composite laminate 34 comprises unidirectional fibers. At least 80% of unidirectional fibers in the inner layers 36 of the monolithic composite laminate 34 extend substantially parallel to the span direction 23. By aligning the fibers of the inner layers 36 in the span direction 23, the inner layers 36 can provide maximum strength and stiffness in this direction where the load is highest due to centrifugal forces.

Furthermore, at least 80 vol.% of the unidirectional fibers in the outer layers 37 of the monolithic composite laminate 34 extend at a non-zero angle with the span direction 23. In particular, the non-zero angle with the span direction 23 alternates in direction between adjacent outer layers 37, and such that the monolithic composite laminate 34 is symmetric with respect to a mid-plane of the laminate. The non-zero angle with the span direction 23 is larger for outer layers 37 closer to the surface of the monolithic composite laminate 34. By aligning the fibers of the outer layers 37 at an angle with the span direction (23), the stiffness of the outer layers 37 is reduced, thereby allowing flapping, lagging and feathering motions of the composite rotor blade 20 within allowables.

**Table 1: Composition of a monolithic composite laminate 34 according to an embodiment.**

| Layer number | Material | Fiber orientation relative to the span direction (23) |
|---|---|---|
| 1 | Unidirectional fibers | +35° |
| 2 | Unidirectional fibers | -35° |
| 3 | Unidirectional fibers | +25° |
| 4 | Unidirectional fibers | -25° |
| 5-16 | Unidirectional fibers | 0° |
| 17 | Unidirectional fibers | -25° |
| 18 | Unidirectional fibers | +25° |
| 19 | Unidirectional fibers | -35° |
| 20 | Unidirectional fibers | +35° |

The monolithic composite laminate 34 shown in Table 1 comprises 20 layers of unidirectional fibers, with each layer having a substantially equivalent volume.

Therefore, the ratio of the volume of the inner layers 36 to the volume of the outer layers 37 is 1:1.5.

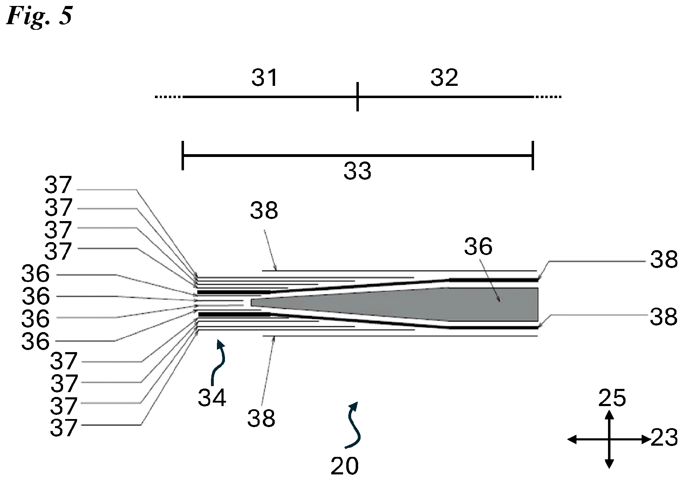

Figure 5 schematically shows a cross-sectional view of a transition region 33 of a composite rotor blade 20 in accordance with an embodiment of the invention. The flexure portion 31 and outer portion 32 comprise a transition region 33 that mechanically connects the outer portion 32 with the flexure portion 31. Four inner layers 36 of the monolithic composite laminate 34 terminate at the core 39 comprised in the outer portion 32. In the transition region 33 of the outer portion 32, eight outer layers 37 of the monolithic composite laminate 34 of the flexure portion 31 extend to the outer portion 32. In the transition region 33 of the flexure portion 31, two layers of the skin 38 of the outer portion 32 extend to the flexure portion 31 and two layers of the skin 38 of the outer portion 32 extend into the flexure portion 31. By having layers from the flexure portion 31 extend to the outer portion 32 and *vice versa*, both portions become mechanically connected upon curing with a resin.

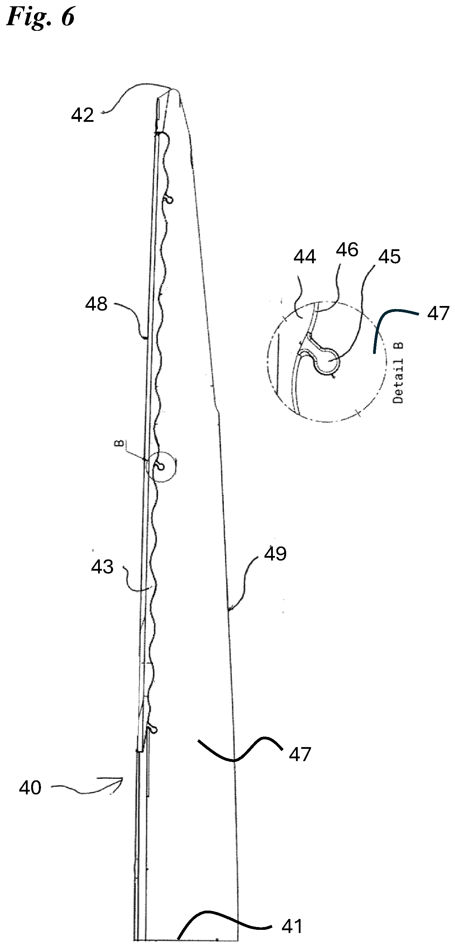

Figure 6 schematically shows a preform core assembly 40 extending between a hub-end 41 thereof and a tip-end 42 of the preform core assembly 40. A balancing weight retention assembly 43 is positioned in the preform core assembly 40 at the leading edge 48 and near the tip-end 42 of the preform core assembly 40, and, after assembly, also substantially at the leading edge 28 and near the tip-end 22 of the composite rotor blade 20. The balancing weight retention assembly 43 comprises a balancing weight 44 having a cross-sectional dimension that alternates and having three positioning pins 45. The balancing weight 44 is retained in a retention element 46 comprising a fibrous textile structure. The retention element 46 almost completely surrounds the balancing weight 44. Between the balancing weight retention assembly 43 and the trailing edge 49 of the preform core assembly 40 is provided a foam core 47. After assembly, the foam core 47 is provided between the balancing weight retention assembly 43 and the trailing edge 29 of the composite rotor blade 20. The alternating shape of the balancing weight 44 cooperates with a shape of the foam core 47 and the positioning pins 45 of the balancing weight 44 cooperate with slots in the foam core 47.

## Claims

1. A composite rotor blade, comprising reinforcing fibers and a resin, and extending from a hub-end to a tip-end thereof in a span direction over a span length and from a leading edge to a trailing edge thereof in a width direction over a chord width, wherein the rotor blade comprises a root portion at the hub-end, an outer portion extending up to the tip-end and a flexure portion in between the root and outer portions, wherein:
- the root portion is configured for connection to a rotor hub;
- the outer portion comprises a sandwich structure having a composite skin and a core; and
- the flexure portion essentially consists of a monolithic composite laminate, wherein the chord width of the flexure portion decreases over the span length in the direction of the tip-end.

2. A composite rotor blade as claimed in claim 1, wherein the chord width of the flexure portion decreases between a maximum chord width Wₘₐₓ and a minimum chord width Wₘᵢₙ, wherein Wₘᵢₙ/Wₘₐₓ is at most 0.9, preferably at most 0.8, more preferably at most 0.7, even more preferably at most 0.6, most preferably at most 0.5.

3. A composite rotor blade as claimed in claim 2, wherein the maximum chord width Wₘₐₓ is at an end of the flexure portion connecting to the root portion, and the minimum chord width Wₘᵢₙ is at an end of the flexure portion connecting to the outer portion.

4. A composite rotor blade as claimed in claim 2 or 3, wherein the flexure portion has an average thickness D and 5 < Wmin/D < 50, more preferably 5< Wmin/D <40, even more preferably 10 < Wmin/D < 30, most preferably 10 <Wmin/D < 20.

5. A composite rotor blade as claimed in any one of claims 2-4, wherein the flexure portion is twisted around a feathering axis over an inclination angle.

6. A composite rotor blade as claimed in any one of the preceding claims, wherein the monolithic composite laminate of the flexure portion comprises unidirectional fibers, wherein inner layers of the monolithic composite laminate comprise unidirectional fibers extending substantially parallel to the span direction of the rotor blade, and wherein outer layers of the monolithic composite laminate comprise unidirectional fibers extending at a non-zero angle with the span direction.

7. A composite rotor blade as claimed in claim 6, wherein at least 80 vol.% of the unidirectional fibers in the inner layers of the monolithic composite laminate extend substantially parallel to the span, and wherein at least 80 vol.% of the unidirectional fibers in the outer layers of the monolithic composite laminate extend at a non-zero angle with the span.

8. A composite rotor blade as claimed in claim 6 or 7, wherein the ratio of the volume of the inner layers to the volume of the outer layers ranges from 1:1 to 1:5, preferably from 1:1 to 1:2.

9. A composite rotor blade as claimed in any one of the claims 1-8, wherein the monolithic composite laminate is asymmetric with respect to a mid-plane of the laminate.

10. A composite rotor blade as claimed in any one of the preceding claims, wherein the flexure portion and the outer portion comprise a transition region that mechanically connects the outer portion with the flexure portion.

11. A composite rotor blade as claimed in any one of the preceding claims, wherein the outer portion comprises a balancing weight, wherein a cross-sectional dimension of the balancing weight optionally alternates.

12. A composite rotor blade as claimed in claim 11, wherein the balancing weight is retained in a retention element comprising a fibrous textile structure, and wherein the retention element at least partially surrounds the balancing weight.

13. A composite rotor blade as claimed in any one of the preceding claims, comprising two flexure portions and two outer portions, arranged symmetrically with respect to the root portion.

14. A method of manufacturing a composite rotor blade as claimed in any one of the preceding claims, comprising the steps of:
- providing a preform comprising the reinforcing fibers and the core of the composite rotor blade;
- positioning the preform in a mold;
- closing the mold;
- injecting a resin into the mold to infuse the preform with the resin;
- curing the resin; and
- taking the thus formed composite rotor blade out of the mold.

15. A rotor comprising a rotor hub and a composite rotor blade as claimed in any one of the preceding claims, wherein the composite rotor blade is preferably rigidly connected to the rotor hub.

16. An aerial vehicle comprising a rotor as claimed in claim 15, wherein the aerial vehicle is preferably one of a helicopter, an electric vertical take-off and landing (eVTOL) aerial vehicle, or an unmanned aerial vehicle (UAV).
